# EUROPÄISCHE PATENTSCHRIFT

(11) **EP 2 121 357 B1**
(45) Veröffentlichungstag und Bekanntmachung des Hinweises auf die Patenterteilung: **09.01.2013**
(21) Anmeldenummer: 08707178.3
(22) Anmeldetag: 22.01.2008
(51) Int. Cl.: B60C 29/00, B60C 29/02, B60B 21/12, B60B 1/08

(54) **FELGE, INSBESONDERE AUTOFELGE**
WHEEL RIM, IN PARTICULAR AUTOMOBILE WHEEL RIM
JANTE, EN PARTICULIER JANTE POUR AUTOMOBILE

(30) Priorität: 15.02.2007 DE 202007002237 U
(43) Veröffentlichungstag der Anmeldung: 25.11.2009
(73) Patentinhaber: Borbet GmbH, 59969 Hallenberg (DE)
(72) Erfinder: SÜSS, Dietmar, 58640 Iserlohn (DE); SCHLEITING, Georg, 42657 Solingen (DE)
(74) Vertreter: Stenger, Watzke & Ring
(86) Internationale Anmeldenummer: PCT/EP2008/000445
(87) Internationale Veröffentlichungsnummer: WO 2008/098660

(56) Entgegenhaltungen:
- EP-A- 1 216 848
- EP-A- 1 647 417
- DE-A1- 4 103 644
- DE-A1- 10 037 562

## Beschreibung

Die Erfindung betrifft eine Felge, insbesondere eine Autofelge, mit einem Innenteil, einem Außenteil und mehreren das Innenteil mit dem Außenteil verbindenden Speichen, wobei das Innenteil, das Außenteil und die Speichen als Gußteil einstückig ausgebildet sind.

Felgen im allgemeinen sowie Autofelgen im speziellen sind aus dem Stand der Technik an sich bekannt, so zum Beispiel aus der EP 1 647 417 A1, der DE 44 30 488 A1 und der DE 41 03 644 A1 und der gattungsgemässen DE 100 63 506 A1.

Felgen können als geschmiedete Teile, als Sinterteile, als Gußteile oder dergleichen Teile ausgebildet sein. Die Erfindung betrifft gegossen ausgebildete Felgen, vorzugsweise solche aus Leichtmetall wie beispielsweise Aluminium.

Eine Felge weist grundsätzlich ein Innenteil, die sogenannte Nabe, ein Außenteil, welches seinerseits aus einem vorderen Felgenhom, einem hinteren Felgenhorn und einem Felgenbett gebildet ist, sowie mehrere das Innenteil mit dem Außenteil verbindenden Speichen auf. Dabei sind bei einer gegossenen Felge das Innenteil, das Außenteil und die Speichen als Gußteil einstückig ausgebildet.

Bei einer bestimmungsgemäßen Verwendung der Felge dient das Außenteil der Felge zur Aufnahme eines Reifens. Zusammen bilden die Felge und der Reifen das montagefertige Rad.

Der auf eine Felge aufgezogene und vom Außenteil der Felge aufgenommene Reifen stellt bekanntermaßen eine im Betriebsfall unter Luftdruck stehenden Volumenraum bereit, der vorzugsweise schlauchlos ausgebildet ist. Von außen ist dieser Volumenraum über ein Ventil zugänglich, welches am Außenteil der Felge, vorzugsweise dem vorderen Felgenhorn angeordnet ist. Über dieses Ventil kann in an sich bekannter Weise der im vom Reifen bereitgestellten Volumenraum herrschende Druck wahlweise dadurch erhöht bzw. reduziert werden, daß Luft eingefüllt bzw. abgelassen wird.

Obgleich sich Felgen der vorbeschriebenen Art im alltäglichen Praxiseinsatz bewährt haben, besteht nach wie vor Verbesserungsbedarf. So wird es insbesondere als nachteilig empfunden, daß das am Außenteil der Felge angeordnete Ventil selbst bei einem bestimmungsgemäßen und sachgerechten Gebrauch der Felge leicht verschmutzen und gegebenenfalls sogar beschädigt werden kann.

Um diesem Nachteil zu begegnen, ist beispielsweise mit der EP 1 647 417 A1 und der DE 100 63 506 A1 vorgeschlagen worden, das Ventil im Bereich des Innenteils der Felge anzuordnen, wobei zur Ausbildung eines Luftkanals zwischen Ventil und dem vom Reifen umschlossenen Volumenraum ein in die Felge eingesetztes Röhrchen dient.

Die Verwendung eines Röhrchens zwecks Ausbildung eines Luftkanals zwischen Ventil einerseits und Reifen andererseits ist in zweierlei Hinsicht problematisch. Zum einen hat die Ausrichtung des Röhrchens mit Bezug auf den späteren Ventilsitz äußerst paßgenau zu erfolgen, weil ansonsten die Gefahr besteht, daß es zur Ausbildung eines nicht ordnungsgemäßen Luftkanals kommt. Zum anderen besteht ein Korrosionsproblem, da die von außen über das als Luftkanal dienende Röhrchen in den Reifen einzuführende Luft Feuchtigkeitsanteile enthält. Dies kann zu korrosionsbedingten Ablagerungen im Röhrchen führen, was im schlimmsten Fall zu einer Verstopfung desselben führt.

Zur Beseitigung dieser den Konstruktionen nach dem Stand der Technik anhaftenden Nachteile ist es die **Aufgabe** der Erfindung, eine Felge der gattungsgemäßen Art bereitzustellen, die insbesondere dahingehend weiterentwickelt ist, daß bei gleichzeitiger Langlebigkeit der Felge eine vereinfachte Herstellung ermöglicht ist.

Zur **Lösung** dieser Aufgabe wird mit der Erfindung eine Felge vorgeschlagen, die dadurch gekennzeichnet ist, daß zur Ausbildung eines Luftkanals in eine Speiche ein aus Edelstahl gebildetes Röhrchen eingegossen ist, welches mit einer als Montagehilfe dienenden Halteeinrichtung versehen ist, die aus Messing oder Stahl gebildet ist und die zur Aufnahme des Röhrchens einen Grundkörper und zur Abstützung in einer Gießform am Grundkörper angeordnete Arme aufweist.

Die erfindungsgemäße Felge zeichnet sich durch einen vom Innenteil zum Außenteil der Felge reichenden Luftkanal aus, der durch ein in eine Speiche eingegossenes Röhrchen aus Edelstahl gebildet ist.

Durch die Ausbildung eines solchen Luftkanals wird die Möglichkeit geschaffen, das zur Kommunikation mit dem von einem Reifen bereitgestellten Volumenraum vorgesehene Ventil im Bereich des Innenteils der Felge anzuordnen. Dabei ist der Luftkanal erfindungsgemäß durch ein aus Edelstahl gebildetes Röhrchen gebildet, welches im Zuge der Verfahrensherstellung in das Felgengrundmaterial, beispielsweise Aluminium, eingegossen wird.

Die erfindungsgemäße Felge ist aus mehreren Gründen gegenüber den aus dem Stand der Technik bekannten Felgen von Vorteil. So ist die Position des notwendigerweise vorzusehenden Ventils insoweit verlagert, als daß es am Innenteil der Felge angeordnet werden kann. Vor Verschmutzungen oder Beschädigungen ist das Ventil damit besser geschützt. Von Vorteil ist des weiteren, daß der in erfindungsgemäßer Weise ausgebildete Luftkanal korrosionsunanfällig ausgebildet ist. Es ist weder Kontaktkorrosion noch durch Feuchtigkeitseintrag bedingte Korrosion zu befürchten. Dieser Vorteil ist insbesondere dadurch begründet, daß das den Luftkanal ausbildende Röhrchen aus Edelstahl gebildet ist.

Die erfindungsgemäße Felge ist zudem fertigungstechnisch ohne nennenswerten Mehraufwand herstellbar. Zur Ausbildung des Luftkanals wird das Edelstahlröhrchen in der entsprechenden Gußform positioniert. In an sich bekannter Weise kann dann der eigentliche Gießvorgang durchgeführt werden. Der Mehraufwand besteht also lediglich darin, das Edelstahlröhrchen an der dafür bestimmten Stelle in die entsprechende Gußform einzubringen. Um zu verhindern, daß während des Gießens ungewollt Gußmaterial in das Edelstahlröhrchen eindringt, ist dieses beidendseitig verschlossen ausgebildet, beispielsweise verschweißt. Nach vollendetem Gießvorgang und Auskühlen der gegossenen Felge werden die beidseitig geschlossenen Enden des Edelstahlröhrchens geöffnet, beispielsweise dadurch, daß die verschlossenen Endabschnitte im Zuge der dem Gießvorgang ohnehin nachfolgenden Nachbearbeitung der Felge abgetrennt werden.

Für eine lagesichere Positionierung des Edelstahlröhrchens innerhalb der entsprechenden Gießform, beispielsweise der Kokille, ist das Edelstahlröhrchen mit einer als Montagehilfe dienenden Halteeinrichtung versehen. Diese Halteeinrichtung ist mit dem Edelstahlröhrchen verklemmt, verklebt, verschweißt, verlötet oder sonstwie verbunden und stützt das Röhrchen lagesichemd gegenüber der Gießform ab. Die Halteeinrichtung kann aus Messing oder aus Stahl, insbesondere einem weichen Stahl, gebildet sein und wird ebenso wie das Edelstahlröhrchen miteingegossen. Erfindungsgemäß besteht die Halteeinrichtung aus einem Grundkörper einerseits und zwei daran angeordneten Fortsätzen andererseits. Der Grundkörper nimmt das Edelstahlröhrchen auf, wohingegen die Fortsätze zur Abstützung der Halteeinrichtung und des davon aufgenommenen Edelstahlröhrchens gegenüber der Kokille dienen. Um eine verrutschsichere Anordnung einer Halteeinrichtung innerhalb einer Kokille zu gewährleisten, verfügt die Kokille über zu den Fortsätzen der Halteeinrichtung korrespondierend ausgebildete Aufnahmen. In diese Aufnahmen sind bei einer bestimmungsgemäßen Vormontage die Fortsätze der Halteeinrichtung eingesetzt, so daß ein Verschieben der Halteeinrichtung in Längsrichtung des von der Halteeinrichtung aufgenommenen Edelstahlröhrchens ungewollt nicht möglich ist. In vorteilhafter Weise wird hierdurch eine Arretierung des Edelstahlröhrchens in Längsrichtung sichergestellt. Darüber hinaus kann vorgesehen sein, daß die in der Kokille ausgebildeten Aufnahmen zur Abstützung der von der Halteeinrichtung bereitgestellten Fortsätze auch eine Arretierung der Halteeinrichtung in einer quer zur Längserstreckung des Edelstahlröhrchens liegenden Richtung erlauben. Bevorzugterweise wird ein Edelstahlröhrchen durch wenigstens zwei Halteeinrichtungen lagefixiert. Der besondere Vorteil der vorbeschriebenen Halteeinrichtung besteht darin, daß ein positionsgenaues Eingießen des Edelstahlröhrchens in das Felgenmaterial möglich ist. Zudem wird ein Verschieben der Edelstahlröhrchen während eines Gießprozesses verhindert, so daß dank der Halteeinrichtung die wunschgemäße Lage des Edelstahlröhrchens sichergestellt ist.

Gemäß einem weiteren Merkmal der Erfindung mündet der Luftkanal innenteilseitig in eine Anschlußbohrung. Diese Anschlußbohrung weist ein Innengewinde auf und dient der Aufnahme eines Ventils. Der durch das Edelstahlröhrchen gebildete Luftkanal kann insofern auch als Ventilkanal bezeichnet werden.

Gemäß einer besonderen Ausgestaltung der Erfindung weist das Innenteil eine mit einem Deckel verschließbare Ausnehmung auf. Dabei ist der Deckel vorzugsweise abschließbar mit dem Innenteil verbindbar ausgebildet. Die das Ventil aufnehmende Anschlußbohrung ist dabei vorzugsweise im Bereich der verschließbaren Ausnehmung des Innenteils ausgebildet. Aufgrund dieser Ausgestaltung ist das Ventil aufgrund des abschließbar am Innenteil anordbaren Deckels vor ungewollten Zugriffen, wie zum Beispiel Vandalismus geschützt. Auch ungewollten Verschmutzungen oder Beschädigungen kann so nochmals verbessert entgegengewirkt werden.

Insgesamt wird der Erfindung eine Felge vorgeschlagen, der gemäß das Ventil zur Kommunikation mit dem von einem auf die Felge aufgezogenen Reifen bereitgestellten Volumenraum nicht am Außenteil der Felge sondern am Innenteil der Felge, der sogenannten Nabe angeordnet ist. Das Ventil einerseits sowie der vom Reifen bereitgestellte Volumenraum andererseits stehen strömungstechnisch über einen Luftkanal in Verbindung, der erfindungsgemäß durch eine in eine Speiche der Felge eingegossenes Röhrchen aus Edelstahl gebildet ist. Innenteilseitig endet dieser Luftkanal in eine mit einem Innengewinde ausgebildete Anschlußbohrung, die das Ventil aufnimmt. Die Anschlußbohrung ist ihrerseits in einer am Innenteil ausgebildeten Ausnehmung angeordnet, wobei die Ausnehmung mittels eines dafür vorgesehenen Deckels abschließbar ist. Hierdurch kann in besonders effektiver Weise sichergestellt werden, daß das Ventil vor ungewollten Eingriffen, Verschmutzungen, Beschädigungen oder dergleichen Einflüsse geschützt ist.

Die erfindungsgemäße Felge zeichnet sich aufgrund der vorbeschriebenen Konstruktion darüber hinaus durch ihr ansprechendes Design aus, weil das notwendigerweise vorzusehende Ventil für einen Betrachter unsichtbar ist.

Weitere Merkmale und Vorteile der Erfindung ergeben sich aus der nachfolgenden Beschreibung anhand der Figuren. Dabei zeigen:
- Fig. 1:: in schematischer Draufsicht ausschnittsweise eine erfindungsgemäße Felge;
- Fig. 2:: die erfindungsgemäße Felge in einer schematischen Schnittdarstellung gemäß Schnittlinie II-II nach Fig. 1;
- Fig. 3:: in einer schematischen Darstellung ein Edelstahlröhrchen;
- Fig. 4:: in einer schematischen Seitenansicht eine Halteeinrichtung;
- Fig. 5:: in einer schematischen Draufsicht die Halteeinrichtung nach Fig. 4 und
- Fig. 6:: in einer schematisch perspektivischen Darstellung die Halteeinrichtung nach den Fign. 4 und 5.

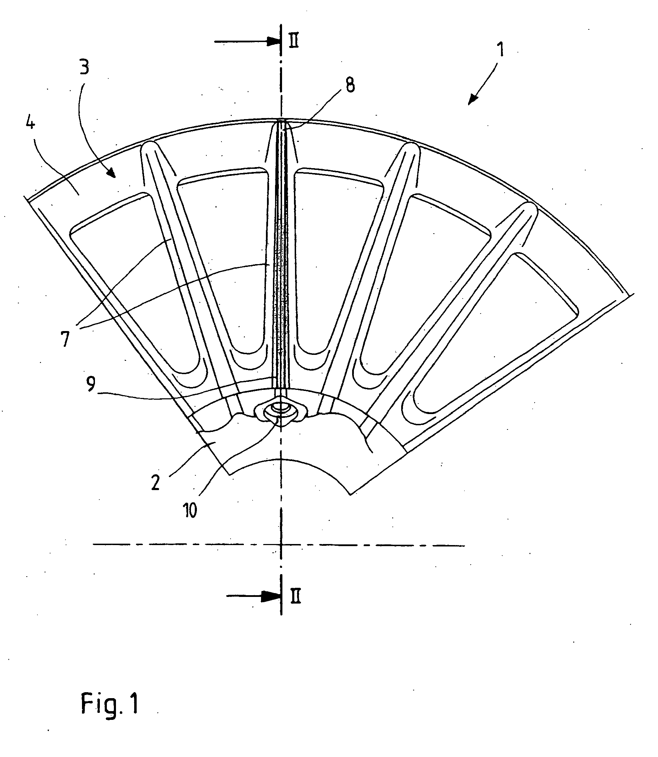

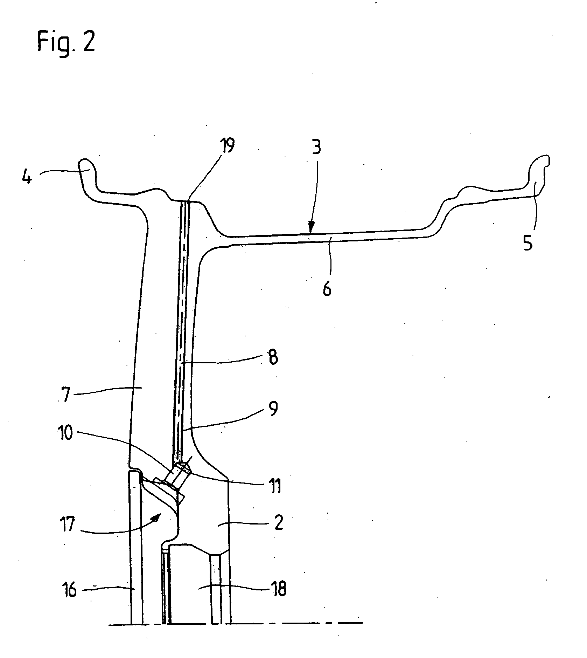

Fig. 1 zeigt ausschnittsweise eine erfindungsgemäße Felge 1. Die Schnittdarstellung der Felge 1 gemäß der Schnittlinie II-II ist in Fig. 2 dargestellt.

Wie die Fign. 1 und 2 erkennen lassen, weist die Felge 1 in an sich bekannter Weise ein Innenteil 2, ein Außenteil 3 sowie mehrere das Innenteil 2 mit dem Außenteil 3 verbindende Speichen 7 auf. Dabei sind das Innenteil 2, das Außenteil 3 und die Speichen 7 als Gußteil einstückig ausgebildet. Die Felge 1 ist bevorzugterweise als Leichtbauteil ausgebildet und besteht aus Aluminiumguß.

Das Außenteil 3, welches seinerseits ein vorderes Felgenhorn 4, ein hinteres Felgenhorn 5 sowie ein Felgenbett 6 aufweist, dient in an sich bekannter Weise zur Aufnahme eines im Betriebsfall auf die Felge 1 aufgezogenen Reifens. Das Innenteil 2, die sogenannte Nabe weist in an sich bekannter Weise eine Durchgangsbohrung 18 auf und dient der bestimmungsgemäßen Anordnung der Felge 1 an einem Kraftfahrzeug, beispielsweise einem Auto.

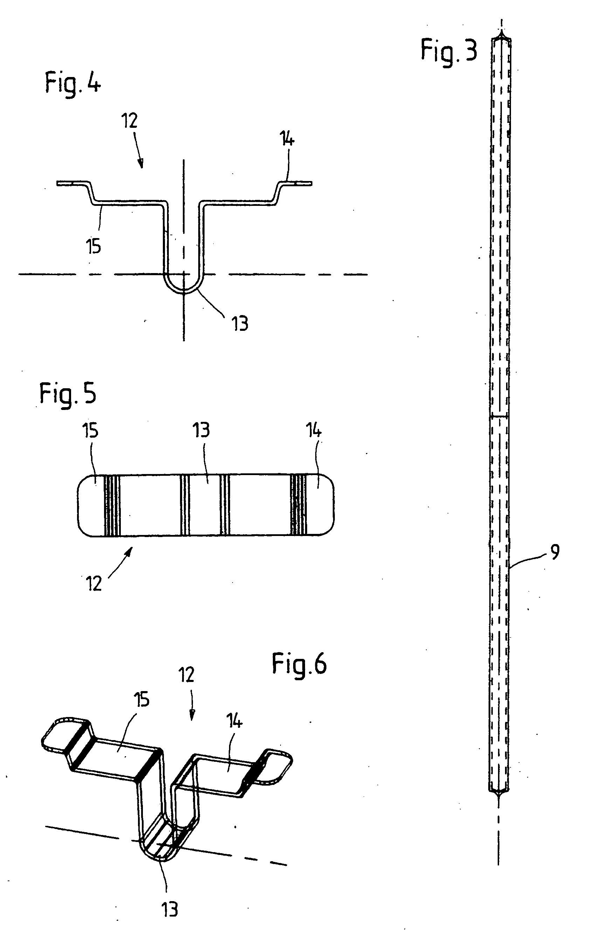

Erfindungsgemäß ist die Felge 1 durch einen vom Innenteil 2 zum Außenteil 3 reichenden Luftkanal 8 gekennzeichnet, der durch ein in eine Speiche 7 eingegossenes Röhrchen 9 aus Edelstahl gebildet ist. Fig. 3 zeigt dieses Edelstahlröhrchen 9 in einer Detailansicht.

Der vom Röhrchen 9 gebildete Luftkanal 8 endet außenteilseitig mit einer offenen Bohrung 19 im Bereich des vorderen Felgenhorns 4. Anderendseitig, d. h. innenteilseitig mündet der durch das Röhrchen 9 gebildete Luftkanal 8 in eine mit einem Innengewinde 11 versehenen Anschlußbohrung 10. Diese Anschlußbohrung 10 dient der Aufnahme eines in den Fign. nicht näher dargestellten Ventils. Im endfertig montierten Zustand kann über das in den Fign. nicht näher dargestellte Ventil Luft in den von einem auf die Felge 1 aufgezogenen Reifen bereitgestellten Volumenraum eingeführt werden, wobei die Luft durch den Luftkanal 8 hindurchströmt. In gleicher Weise ist eine Luftdruckreduzierung möglich, wobei in diesem Fall Luft aus dem von einem auf die Felge 1 aufgezogenen Reifen bereitgestellten Volumenraum hinaus über den Luftkanal 8 zu einem in den Fign. nicht mehr dargestellten Ventil strömt.

Wie insbesondere die Darstellung nach Fig. 2 erkennen läßt, ist die Anschlußbohrung 10 im Bereich einer Ausnehmung 17 des Innenteils 2 angeordnet. Diese Ausnehmung 17 ist vorderseitig, d.h. mit Bezug auf die Blattebene nach Fig. 2 linksseitig mittels eines in Fig. 2 schematisch angedeuteten Deckels 16 verschließbar. Dabei ist die Ausgestaltung des Deckels 16 bevorzugter Weise derart, daß der Deckel 16 abschließbar mit dem Innenteil 2 verbindbar ausgebildet ist. Ein unbefugter bzw. ungewollter Zugriff auf die vom Deckel 16 verschlossene Ausnehmung und damit auf ein in der Anschlußbohrung 10 angeordnetes Ventil ist in vorteilhafter Weise unterbunden. Damit ist ein von der Anschlußbohrung 10 aufgenommenes Ventil vor Vandalismus, Verschmutzung sowie ungewollten Beschädigungen geschützt. Darüber hinaus gewährleistet die vorbeschriebene Konstruktion eine quasi unsichtbare Ausgestaltung und Anordnung des Ventils, da dieses im Unterschied zum Stand der Technik nicht im Bereich des vorderen Felgenhornes 4 sondern im Bereich des Innenteils 2 ausgebildet ist. Zur strömungstechnischen Verbindung des im Bereich des Innenteils 2 angeordneten Ventils einerseits und der von einem auf die Felge bestimmungsgemäß aufgezogenen Reifen bereitgestellten Volumenraums andererseits dient der Luftkanal 8, der erfindungsgemäß durch ein Edelstahlröhrchen 9 gebildet ist.

Das Edelstahlröhrchen 9 ist in einer Detailansicht in Fig. 3 gezeigt. Wie hier zu erkennen ist, ist das Edelstahlröhrchen 9 zunächst endseitig jeweils geschlossen ausgebildet, beispielsweise dadurch, daß die endseitigen Öffnungen des Röhrchens 9 verschweißt sind. Ein Verschließen der endseitigen Öffnungen des Edelstahlröhrchens 9 ist deshalb erforderlich, als das im Zuge eines Gießvorganges zur Herstellung der Felge 1 kein Gußmaterial in ungewollter Weise in das Röhrchen 9 eintritt.

Zwecks Herstellung einer erfindungsgemäßen Felge 1 wird das in Fig. 3 dargestellte und endseitig jeweils verschlossene Röhrchen 9 in eine entsprechende Gußform, vorzugsweise die Kokille eingelegt. Alsdann erfolgt der Gießvorgang. Sobald der Gießvorgang abgeschlossen und die Felge 1 zwecks weiterer Nachbearbeitung abgekühlt ist, wird das Röhrchen 9 endseitig jeweils geöffnet, so daß sich die in den Fign. 1 und 2 gezeigte Ausgestaltungsform ergibt.

Um sicherzustellen, daß sich das in eine Gußform eingebrachte Röhrchen 9 im Zuge eines Gießvorganges nicht verschiebt sondern statt dessen lagesicher relativ zur Gußform innerhalb dieser angeordnet ist, dient wenigstens eine in den Fign. 4 bis 6 in verschiedenen Ansichten dargestellte Halteeinrichtung 12. Diese Halteeinrichtung 12 ist, wie insbesondere die Fign. 4 und 6 erkennen lassen, aus einem Grundkörper 13 sowie daran angeordneten Armen 14 und 15 gebildet. Der Grundkörper 13 dient der Aufnahme des Röhrchens 9 und ist mit diesem verklemmt, verklebt, verschweißt, verlötet oder sonstwie verbunden. Die Arme 14 und 15 der Halteeinrichtung 12 liegen nach einer gießfertigen Vorbereitung auf entsprechenden Abstützungen der Gießform auf. Im Zuge eines sich dann anschließenden Gießvorganges werden das Röhrchen 9 sowie die wenigstens eine Halteeinrichtung 12 eingegossen. Der endfertige Zustand ist in den Fign. 1 und 2 dargestellt, wobei der besseren Übersicht wegen die miteingegossene wenigstens eine Halteeinrichtung 12 in den Fign. 1 und 2 nicht dargestellt ist.

### Bezugszeichenliste

- 1: Felge
- 2: Innenteil
- 3: Außenteil
- 4: vorderes Felgenhorn
- 5: hinteres Felgenhorn
- 6: Felgenbett
- 7: Speiche
- 8: Luftkanal
- 9: Röhrchen
- 10: Anschlußbohrung
- 11: Innengewinde
- 12: Halteeinrichtung
- 13: Grundkörper
- 14: Arm
- 15: Arm
- 16: Deckel
- 17: Ausnehmung
- 18: Durchgangsbohrung
- 19: Bohrung

## Patentansprüche

1. Felge, insbesondere Autofelge, mit einem Innenteil (2), einem Außenteil (3) und mehreren das Innenteil (2) mit dem Außenteil (3) verbindenden Speichen (7), wobei das Innenteil (2), das Außenteil (3) und die Speichen (7) als Gußteil einstückig ausgebildet sind, **dadurch gekennzeichnet, daß** zur Ausbildung eines Luftkanals (8) in eine Speiche (7) ein aus Edelstahl gebildetes Röhrchen (9) eingegossen ist, welches mit einer als Montagehilfe dienenden Halteeinrichtung (12) versehen ist, die aus Messing oder Stahl gebildet ist und die zur Aufnahme des Röhrchens (9) einen Grundkörper (13) und zur Abstützung in einer Gießform am Grundkörper (13) angeordnete Arme (14, 15) aufweist.

2. Felge nach Anspruch 1, **dadurch gekennzeichnet, daß** der Luftkanal (8) innenteilseitig in eine Anschlußbohrung (10) mündet.

3. Felge nach Anspruch 2, **dadurch gekennzeichnet, daß** die Anschlußbohrung (10) ein Innengewinde (11) aufweist.

4. Felge nach Anspruch 1, **dadurch gekennzeichnet, daß** die Halteeinrichtung (12) mit dem Röhrchen (9) verklemmt, verklebt, verschweißt, verlötet oder sonstwie verbunden ist.

5. Felge nach einem der vorhergehenden Ansprüche, **dadurch gekennzeichnet, daß** das Innenteil (2) eine mit einem Deckel (16) verschließbare Ausnehmung (17) aufweist.

6. Felge nach Anspruch 5, **dadurch gekennzeichnet, daß** der Deckel (16) verschließbar mit dem Innenteil (2) verbindbar ausgebildet ist.

7. Felge nach einem der vorhergehenden Ansprüche, **dadurch gekennzeichnet, daß** die Anschlußbohrung (10) im Bereich der verschließbaren Ausnehmung (17) des Innenteils (2) ausgebildet ist.

8. Felge nach einem der vorhergehenden Ansprüche, **dadurch gekennzeichnet, daß** in die Anschlußbohrung (10) ein Ventil eingesetzt ist.

## Claims

1. A wheel rim, in particular an automobile wheel rim, having an inner part (2), an outer part (3) and several spokes (7) which connect the inner part (2) to the outer part (3), wherein the inner part (2), the outer part (3) and the spokes (7) are formed as one piece in form of a cast part, **characterized in that** a tube (9) made of special steel is cast into a spoke (7) for forming an air channel (8), the tube being provided with a support device (12) which serves as mounting aid and which is made of brass or steel and which comprises a base body (13) for receiving the tube (9) and arms (14, 15) arranged on the base body (13) for the support in a casting mould.

2. A wheel rim according to claim 1, **characterized in that** the air channel (8) ends in a connection bore (10) on the side of the inner part.

3. A wheel rim according to claim 2, **characterized in that** the connection bore (10) comprises an inside thread (11).

4. A wheel rim according to claim 1, **characterized in that** the support device (12) is jammed with, glued, welded, soldered or otherwise connected to the tube (9).

5. A wheel rim according to one of the preceding claims, **characterized in that** the inner part (2) comprises a recess (17) which can be closed by a cover (16).

6. A wheel rim according to claim 5, **characterized in that** the cover (16) can be connected in a closing manner to the inner part (2).

7. A wheel rim according to one of the preceding claims, **characterized in that** the connection bore (10) is formed in the area of the closable recess (17) of the inner part (2).

8. A wheel rim according to one of the preceding claims, **characterized in that** a valve is inserted into the connection bore (10).

## Revendications

1. Jante, notamment jante pour automobile, comprenant une partie intérieure (2), une partie extérieure (3) et plusieurs rayons (7) qui relient la partie intérieure (2) et la partie extérieure (3), la partie intérieure (2), la partie extérieure (3) et les rayons (7) étant solidaires sous forme d'une pièce moulée en fente, **caractérisé en ce qu'**un tube (9) en acier spécial est coulé dans une rayon (7) pour former un canal d'air (8), le tube étant muni d'un dispositif de support (12) qui sert d'aide de montage et qui est fabriqué en laiton ou en acier spécial et qui comprend un corps de base (13) pour recevoir le tube (9) et des bras (14, 15) disposés sur le corps de base (13) pour servir à l'appui dans une moule.

2. Jante selon la revendication 1, **caractérisée en ce que** le canal d'air (8) débouche du côté de la partie intérieure dans une forure de raccord (10).

3. Jante selon la revendication 2, **caractérisée en ce que** la forure de raccord (10) comprend un taraudage (11).

4. Jante selon la revendication 1, **caractérisée en ce que** le dispositif de support (12) est coincé avec, collé, soudé, brasé ou autrement relié au tube (9).

5. Jante selon l'une des revendications précédentes, **caractérisée en ce que** la partie intérieure (2) comprend un creux (17) qui est susceptible d'être fermé par un couvercle (16).

6. Jante selon la revendication 5, **caractérisée en ce que** le couvercle (16) est susceptible d'être relié à la partie intérieure (2) en la fermant.

7. Jante selon l'une des revendications précédentes, **caractérisée en ce que** la forure de raccord (10) est formé au niveau du creux (17) obturable de la partie intérieure (2).

8. Jante selon l'une des revendications précédentes, **caractérisée en ce qu'**une soupape est insérée dans la forure de raccord (10).
